# EUROPEAN PATENT APPLICATION

(11) **EP 4 395 138 A1**
(43) Date of publication of application: **03.07.2024**
(21) Application number: 23219780.6
(22) Date of filing: 22.12.2023
(51) Int. Cl.: H02K 5/10, H02K 5/124

(54) **SEALING SYSTEM FOR PROTECTION OF AN ELECTRICAL MACHINE HAVING ROTATING COMPONENTS**

(30) Priority: 27.12.2022 IN 202221075873
(71) Applicant: Portescap India Pvt Ltd, 400096 Mumbai Andheri East (IN)
(72) Inventor: RAO, Raghavendra, 400615 Thane West (IN); DAS, Dibyendu, 400601 Thane (IN); FULIA, Jigar, 400097 Mumbai (IN); RIDHORE, Amol, 401107 Thane West (IN); EKRAM, Samsul, 400706 Mumbai (IN)
(74) Representative: Haseltine Lake Kempner LLP

(57) **Abstract**

The present invention relates to a sealing system for protection of an electrical machine. The sealing system comprises a seal housing (116, 306) mounted on a cannulated shaft (108) of a rotor of the electrical machine. The seal housing (116, 306) holds one or more seal members (114, 302). The one or more seal members (114, 302) includes a lip for creating a sealing joint such that a proximal end of the lip of the one or more seal members (114) may be in contact with a stator of the electrical machine. A distal end of the lip of each of the one or more seal members (114, 302) may be enclosed in the seal housing (116, 306). The seal housing (116, 306) may rotate with rotation of the rotor, thereby preventing entry of any fluid into the electrical machine during operation of the electrical machine.

## Description

### FIELD OF INVENTION

The present invention generally relates to electrical machines. More specifically, the present invention relates to sealing of electrical machines having rotating components.

### BACKGROUND

Electric machines, used in various applications, devices & equipment, such as in surgical equipment are used for performing specific actions or carrying out desired effects. Such electric machines comprise moving components, such as encoders, gearheads, and motors etc. An electric machine may get damaged or may not deliver an intended performance, due to entrance of contaminants such as external fluid and foreign media into the electric machine. For example, the external fluid or the foreign media may enter into the moving components of the electric machine. Entrance of the contaminants into an electric machine causes rotor jam, noisy motor, or electrical failures in the moving components of the electric machine.

To minimize or overcome damage of an electric machine due to entrance of the contaminants, a sealing system is required in the electric machine.

Therefore, there is a need for a simple and effective sealing system for the electric machine for preventing entry of contaminants into the electric machine.

### OBJECTS OF THE INVENTION

An object of the present invention is to develop a sealing system for protecting an electrical machine having rotating components.

Another object of the present invention is to develop a sealing system that rotates with an electrical machine having rotating components.

Yet another object of the present invention is to develop a sealing system for preventing entry of external media into an electrical machine having rotating components.

Still another object of the present invention is to develop a sealing system for preventing wear and tear of an electrical machine having rotating components.

### SUMMARY OF THE INVENTION

The summary is provided to introduce aspects related to a sealing system for protecting an electrical machine having rotating components, and the aspects are further described below in the detailed description. This summary is not intended to identify essential features of the claimed subject matter nor is it intended for use in determining or limiting the scope of the claimed subject matter.

The present invention relates to a sealing system for protection of an electrical machine having rotating components. The sealing system may comprise a seal housing rotatably mounted on a rotor of an electrical machine. The seal housing may house one or more seal members. The one or more seal members may include a lip for creating a sealing joint. The lip at a distal end may be enclosed in a seal housing and a proximal end of the lip may be mounted in contact with a surface of a stator of the electrical machine. The one or more seal members may rotate with the rotor while maintaining contact with the stator, thereby preventing leakage of fluids from an external environment into rotating components of the electrical machine.

In one aspect, the one or more seal member may be arranged in a radial direction of a shaft of the rotor.

In one aspect, the one or more seal members may be arranged in an axial direction of the shaft of the rotor.

In one aspect, the electrical machine may be a motor, a gearbox, a generator, or a miniaturized motor.

In one aspect, the seal housing may be mounted over a cannulated shaft of the rotor.

In one aspect, the seal housing may be integrated with a cannulated shaft of the rotor.

In one aspect, the one or more seal members may be mounted adjacent to ball bearings and the one or more seal members may rotate at a speed of rotation of the ball bearings and/or at a speed of rotation of the cannulated shaft (108) engaged with the gearhead output shaft (104).

In one aspect, the electrical machine may be a generator.

In one aspect, the seal housing may be mounted over the rotor by one or more of a press-fitting technique, welding, gluing, or screw fastening.

In one aspect, the one or more seal members may be made of one or more of metallic, non-metallic material, polymeric, and rubber material.

In one aspect, the seal housing may be modular having one or more portions of the seal housing removably mounted to the rotor, and the one or more seal members may be configured to be removed from the one or more portions of the seal housing.

### BRIEF DESCRIPTION OF THE DRAWINGS

The accompanying drawings constitute a part of the description and are used to provide further understanding of the present invention. Such accompanying drawings illustrate the embodiments of the present invention which are used to describe the principles of the present invention. The embodiments are illustrated by way of example and not by way of limitation in the figures of the accompanying drawings in which like references indicate similar elements. It should be noted that references to "an" or "one" embodiment in this invention are not necessarily to the same embodiment, and they mean at least one. In the drawings:
**Fig. 1** illustrates a front view of a sealing system for an electrical machine having rotating components, in accordance with an embodiment of the present invention;
**Fig. 2** illustrates a sealing system **100** with modular arrangement, in accordance with an embodiment of the present invention; and
**Fig. 3** illustrates an arrangement of the sealing system in the electrical machine, in accordance with an embodiment of the present invention.

### DETAILED DESCRIPTION OF THE INVENTION

The detailed description set forth below in connection with the appended drawings is intended as a description of various embodiments of the present invention and is not intended to represent the only embodiments in which the present invention may be practiced. Each embodiment described in this invention is provided merely as an example or illustration of the present invention, and should not necessarily be construed as preferred or advantageous over other embodiments. The detailed description includes specific details for the purpose of providing a thorough understanding of the present invention. However, it will be apparent to those skilled in the art that the present invention may be practiced without these specific details.

The terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps or acts are in some way inherently mutually exclusive.

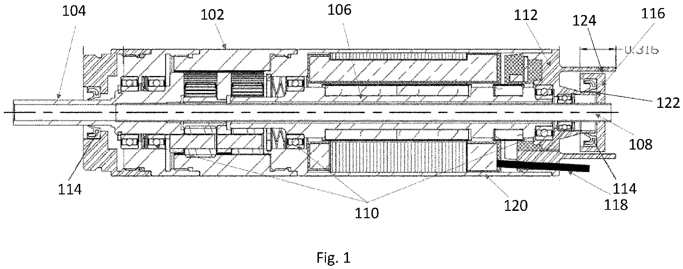

The present invention relates to a sealing system for an electrical machine and / or an electrical system having rotating components. The electrical machine may also include micromotors and miniaturized electrical machine, generally utilised in field of medicine and surgical equipment. In one scenario, the electrical machine may be exposed to liquid or gaseous contaminants. In another scenario, the electrical machines during washing and servicing, may be exposed to fluids used in sterilization cycles and dish washing. **Fig. 1** illustrates a front view of the sealing system for the electrical machine, in accordance with an embodiment of the present invention. The electrical machine may include a motor integrated with a gearhead assembly. The gearhead assembly may include a gearhead **102** mounted over a gearhead output shaft **104.** The electrical machine may also include a motor shaft **106.** The motor shaft **106** may be hollow and form a part of a rotor of the electrical machine. The gearhead output shaft **104** may be coupled with a cannulated shaft **108** as a single unit. The single unit may be supported by one or more ball bearings **110** at both ends.

The electrical machine may further include end bells **112** for supporting the ball bearings **110** and guard rotating parts of the electrical machine. The end bells **112** may be present at rear ends of the cannulated shaft **108.** The electrical machine may further comprise a stator at a portion of the end bells **112.**

The sealing system **100** may comprise one or more seal members **114** to prevent fluid leakage inside the motor and gearhead **102.** Each of the one or more seal members **114** may include a lip for creating a sealing joint. In one implementation, the one or more seal members **114** may be O-ring type, or a seal having a line or a surface contact with a mating surface. An outer end of a lip of the plurality of seal members **114** may be enclosed in a stop ring, an enclosure, or a seal cap. The one or more seal members **114** may be mounted radially inward on a surface of the stator. The one or more seal members **114** may be present adjacent to the ball bearings **110** such that the one or more seal members **114** moves with a speed nearly equal to the ball bearing **110.** The one or more seal members **114** may have dimensions very close to an outside diameter of the motor shaft **106.** Movement of the plurality of seal members **114** may minimize wear and tear of the plurality of seal members **114.** Lip of the one or more seal members **114** may touch the surface of the stator due to natural spring back phenomenon. The lip may be in contact of the stator even after wear and tear of the plurality of seam members **114.** The surface of the stator in contact with the lip of the one or more seal members **114,** may have an N5 surface finish or better, to avail leak proof arrangement. The surface of the stator in contact with the lip of the one or more seal members **114,** may be non-hardened, hardened or coated. The plurality of seal members **114** may be made of a polymer, rubber, silicone or any other sealing material. The plurality of seal members **114** may be manufactured by injection moulding, 2K moulding, or any other process of manufacturing and moulding.

The sealing system **100** may further comprise a seal housing **116** for accommodating the one or more seal members **114.** A proximal end of each of the plurality of seal members **114** may be in contact with the end bells **112** to make a leak proof joint. A distal end of each of the plurality of seal members **114** may be enclosed in an inner diameter of the seal housing **116.** The seal housing **116** may be mounted over an outer diameter of the cannulated shaft **108.** The seal housing **116** may be fitted to the cannulated shaft **108** by press-fitting technique, welding, screw fastening or any other joining method. In one implementation, the seal housing **116** may be made an integral part of the cannulated shaft **108** as a single piece.

The end bells **112** positioned at rear portion of the electrical machine may have an extension for protecting the seal housing **116** from rubbing by cables **118** of the motor. The seal housing **116** may rotate with rotation of the cannulated shaft **108,** at a speed of rotation of the cannulated shaft **108.** The seal housing **116** may be made of one or more of metallic, non-metallic material, polymeric, and rubber material. The sealing system for the electrical machine may be enclosed by a motor housing **120.**

In one implementation, the electrical machine may also comprise additional path blockage clearances i.e. a first clearance **122** between the end bells **112** and the seal housing **116,** and a second clearance **124** between the seal housing **116** and the cannulated shaft **108.** The additional path blockage clearances allow for protection of the sealing system **100** from a pressure of any external fluid entering the motor. The additional path blockage clearances protect the one or more seal members **114** from direct exposure to a large pressure from the external fluids.

The one or more seal members **114** may be arranged in series or in parallel arrangement based on chances of contaminations entering the electrical machine. In one implementation, the one or more seal members **114** may be mounted in a radial direction of the cannulated shaft **108.** In another implementation, the one or more seal members **114** may be mounted in an axial direction of the cannulated shaft.

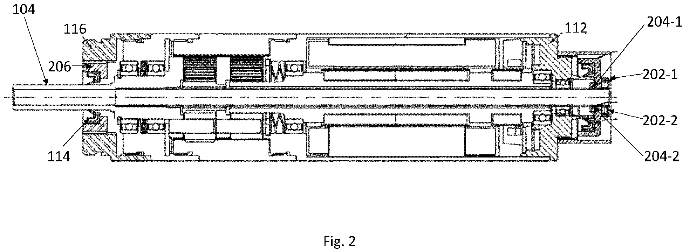

In yet another implementation, the sealing system **100** may be modular sealing system. Modularity may refer to a design strategy of creating a sealing system **100** consisting of separate components or modules that may be easily connected, detached or replaced from the electrical machine. **Fig. 2** illustrates a sealing system **100** with modular arrangement, in accordance with an embodiment of the present invention. The sealing system 100 may be attached to the cannulated shaft **108** engaged with the gearhead output shaft **104,** using one or more grub screws **202-1** to **202-n**. The one or more grub screws **202-1** to **202-n** may be fitted on either side of the gearhead output shaft **104** to secure the seal housing the seal housing **116.** To further secure the connection of the seal housing **116** and the gearhead output shaft **104,** one or more O-rings **204-1** to **204-n** may be positioned between the seal housing **116** and the gearhead output shaft **104,** so that any leakage of the contaminants through the joint of the seal housing **116** and the gearhead output shaft **104** may be prevented. The seal housing **116** may further comprise a screw adaptor **206** enclosing the one or more seal members **114.** The screw adaptor **206** may be a removable portion of the seal housing **116** that may be detached from the seal housing **116** for replacing the one or more seal members **114,** without need for removing the sealing system **100** connected to the electrical machine. Thus, the sealing system **100** may be easily serviced or replaced in case of wear and tear.

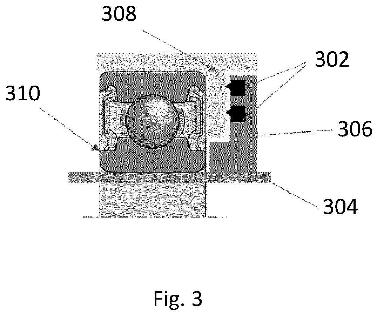

**Fig. 3** illustrates an arrangement of the sealing system in the electrical machine, in accordance with an embodiment of the present invention. The sealing system may comprise one or more seal members **302** (similar to the plurality of seal members **114**)**.** The one or more seal members **302** may be mounted in radial direction of the cannulated shaft **304** between a seal housing **306** and an end bell **308** (similar to the end bells **112**). The end bell **308** may guard a ball bearing **310** (similar to the ball bearing **110**).

In one implementation, during operation of the electrical machine, the hollow motor shaft **106** rotates at a speed ranging up to 1,00,000 rotations per minute, and the gearhead **102** having cannulated shaft **108** engaged with the gearhead output shaft **104** may move at a speed ranging up to 20,000 rotations per minute. The plurality of seal members **114** may rotate at a speed same as that of the cannulated shaft **108,** thereby preventing any fluid leakage from outside environment into the electrical machine during its operation. Further, as the sealing system **100** rotates at the speed of cannulated shaft **108,** which is lesser than speed of the motor, therefore the sealing system **100** may undergo less wear and tear.

Present invention provides a sealing system for protection of an electrical machine, such as a motor, gearbox assembly, miniaturized machines or surgical equipment comprising micromotor. The sealing system comprises a plurality of seal members for preventing any fluid leakage from outside environment into the electrical machine. The plurality of seal members also prevent steam, pressurized fluid, and external fluid media from entering the electrical machine during steam sterilization or during running condition. The plurality of seal members further prevent ball bearings & other mechanical components of the surgical device from degradation and jamming. The plurality of seal members may also improve life and reliability of motor and gearhead system.

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred, systems and methods are now described.

## Claims

1. A sealing system (100) for protection of an electrical machine having rotating components, the sealing system (100) comprising:
a seal housing (116, 306) rotatably mounted on a rotor of an electrical machine;
one or more seal members (114, 302) including a lip for creating a sealing joint, wherein the lip at a distal end is enclosed in a seal housing (116, 306) and a proximal end of the lip is mounted in contact with a surface of a stator of the electrical machine, and
wherein the one or more seal members (114, 302) rotates with the rotor while maintaining contact with the stator, thereby preventing leakage of fluids from an external environment into rotating components of the electrical machine.

2. The sealing system (100) as claimed in claim 1, wherein the one or more seal member (114, 302) are arranged in a radial direction of a shaft of the rotor.

3. The sealing system (100) as claimed in claim 1, wherein the one or more seal members (114, 206) are arranged in an axial direction of the shaft of the rotor.

4. The sealing system (100) as claimed in any preceding claim, wherein the electrical machine is one of a motor, a gearbox, a generator, or a miniaturized motor.

5. The sealing system (100) as claimed in any preceding claim, wherein the seal housing (116, 306) is mounted over a cannulated shaft (108) of the rotor.

6. The sealing system (100) as claimed in any of claims 1 to 4, wherein the seal housing (116, 306) is integrated with a cannulated shaft (108) of the rotor.

7. The sealing system (100) as claimed in any preceding claim, wherein the one or more seal members (114, 302) are mounted adjacent to ball bearings (110) and the one or more seal members (114, 302) rotate at a speed of rotation of the ball bearings (110) and/or at a speed of rotation of the cannulated shaft (108) engaged with the gearhead output shaft (104).

8. The sealing system (100) as claimed in any of claims 1 to 5, wherein the seal housing (116, 306) is mounted over the rotor by one or more of a press-fitting technique, welding, gluing, or screw fastening.

9. The sealing system (100) as claimed in any preceding claim, wherein the one or more seal members (114, 302) is made of one or more of metallic, non-metallic, polymeric, and rubber material.

10. The sealing system (100) as claimed in any preceding claim, wherein the seal housing (116, 306) is modular having one or more portions of the seal housing (116, 306) removably mounted to the rotor, and wherein the one or more seal members (114, 302) is configured to be removed from the one or more portions of the seal housing (116, 302).
